# EUROPEAN PATENT APPLICATION

(11) **EP 3 564 725 A1**
(43) Date of publication of application: **06.11.2019**
(21) Application number: 16925918.1
(22) Date of filing: 30.12.2016
(51) Int. Cl.: G02B 9/60

(54) **OPTICAL SYSTEM FOR CURVED-SCREEN DISPLAY**

(71) Applicant: Shenzhen Royole Technologies Co., Ltd., Shenzhen, Guangdong 518172 (CN)
(72) Inventor: SHI, Hongyan, Shenzhen Guangdong 518052 (CN)
(74) Representative: Mewburn Ellis LLP
(86) International application number: PCT/CN2016/113647
(87) International publication number: WO 2018/120080

(57) **Abstract**

An optical system for a arc-screen display, the system comprising: a first optical element (10), a second optical element (20), a third optical element (30), a fourth optical element (40), and a fifth optical element (50). The optical elements comprise a lens and/or a lens set. The first optical element (10), second optical element (20), third optical element (30), fourth optical element (40), and fifth optical element (50) are arranged in sequence from an object side along a straight optical axis. The optical system for a arc-screen display meets the condition: -10%≤d≤-5%, and d is a maximum edge distortion. The optical system for a arc-screen display of the present disclosure enables display on a arc screen.

## Description

### TECHNICAL FIELD

The present disclosure relates to a field of optical systems, and more particularly, to an optical system for arc screen display.

### BACKGROUND

Traditional arc screen cinemas are perfect for arc screen displays through curtain materials and shapes, multiple projectors, and very complex systems, such as multichannel movie playback systems, and surface correction and edge blending systems. Users who want to watch movies with arc screen effect need to go to cinemas to watch. In order to facilitate the user to watch movies with arc screen effect, it is necessary to provide an optical system capable of presenting arc screen display effect.

### SUMMARY

Implementations of the present disclosure provide an optical system capable of presenting arc screen display effect.

In a first aspect, an optical system for arc screen display is provided in present disclosure, including:
A first optical element, a second optical element, a third optical element, a fourth optical element, and a fifth optical element;
Wherein each of the first optical element, the second optical element, the third optical element, the fourth optical element, and the fifth optical element comprises a lens and/or a lens unit;
Wherein the first optical element, the second optical element, the third optical element, the fourth optical element, and the fifth optical element are sequentially disposed from the object side along a linear optical axis; and
Wherein the optical system satisfies a condition: -10%≤d≤-5%, and the d is the maximum edge distortion.

In a second aspect, an head mounted display device is provided in present disclosure, including the optical system for arc screen display described in the first aspect.

In the optical system for arc screen display of the solution provided by the present disclosure, the object in the design is the image in actual application, and the image in the design is the object in actual application; and in the design process, the maximum field at the edge of the optical system is reserved for negative distortion (barrel shape), thus in actual use, it will present a picture with a certain positive distortion (cushion shape), and achieve curved planar imaging effect as well as the arc screen display effect.

These aspects and other aspects of the present disclosure will be more clearly in the following description of embodiments.

### BRIEF DESCRIPTION OF THE DRAWINGS

In order to more clearly explain the technical solutions in the embodiments of the present disclosure or in the prior art, drawings that need to be used in the embodiments or in the prior art will be briefly introduced below. Obviously, the drawings in the following description are only some embodiments of the present disclosure. For those skilled in the art, other drawings can be obtained without paying creative work.
Fig.1 is a schematic structure of an optical system for arc screen display according to an implementation of the present disclosure.
Fig.2 is a spot diagram of the optical system in Fig.1.
Fig.3 is an optical transfer function diagram of the optical system in Fig.1.
Fig.4 is a field curvature and distortion diagram of the optical system in Fig.1.
Fig.5 is a schematic structure of an optical system for arc screen display according to another implementation of the present disclosure.
Fig.6 is a spot diagram of the optical system in Fig.5.
Fig.7 is an optical transfer function diagram of the optical system in Fig.5.
Fig.8 is a field curvature and distortion diagram of the optical system in Fig.5.

### DETAILED DESCRIPTION

In order to enable those skilled in the art to better understand the solution of the present disclosure, the technical solution in the embodiment of the present disclosure will be described clearly and completely below with reference to the drawings in the embodiment of the present disclosure. Obviously, the described embodiment is only a part of the embodiment of the present disclosure, not all of the embodiments. Based on the embodiments of the present disclosure, all other embodiments obtained by those skilled in the art without creative work are within the scope of the present disclosure.

The details are described below separately.

The terms "first", "second", "third", and "fourth" and the like in the specification, claims and drawings of the present disclosure are used to distinguish different objects, and are not intended to describe a specific order.

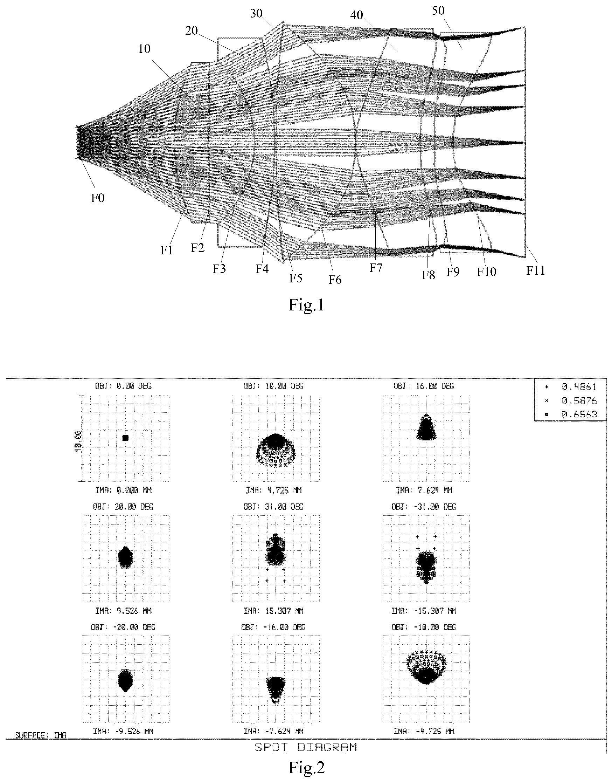

Referring to FIG. 1, FIG. 1 illustrates a schematic structure of an optical system for arc screen display according to an embodiment of the present disclosure. The optical system shown in Fig.1 was designed under a focal length of 19 nanometers, an entrance pupil diameter of 4 nanometers, and a field angle of 62 degrees. The optical system includes a first optical element 10, a second optical element 20, a third optical element 30, a fourth optical element 40, and a fifth optical element 50. The first optical element 10, the second optical element 20, the third optical element 30, the fourth optical element 40, and the fifth optical element 50 are all lenses. The first optical element 10 includes a first convex surface F1 facing to an object side and a first concave surface F2 facing to an image side. The second optical element 20 includes a second concave surface F3 facing to the object side and a second convex surface F4 facing to the image side. The third optical element 30 includes a third convex surface F5 facing to the object side and a fourth convex surface F6 facing to the image side. The fourth optical element 40 includes a fifth convex surface F7 facing to the object side and a third concave surface F8 facing to the image side. The fifth optical element 50 includes a sixth convex surface F9 facing to the object side and a seventh convex surface F10 facing to the image side. The first optical element 10, the second optical element 20, the third optical element 30, the fourth optical element 40, and the fifth optical element 50 are sequentially disposed from the object side along a linear optical axis. In addition, the F0 shown in Fig.1 is an object plane, and the F11 shown in Fig. 1 is an image plane.

The first convex surface F1, the first concave surface F2, the second concave surface F3, the second convex surface F4, and the third convex surface F5 are all spherical surfaces. The fourth convex surface F6, the fifth convex surface F7, the third concave surface F8, the sixth convex surface F9 and the seventh convex surface F10 are all aspherical surfaces.

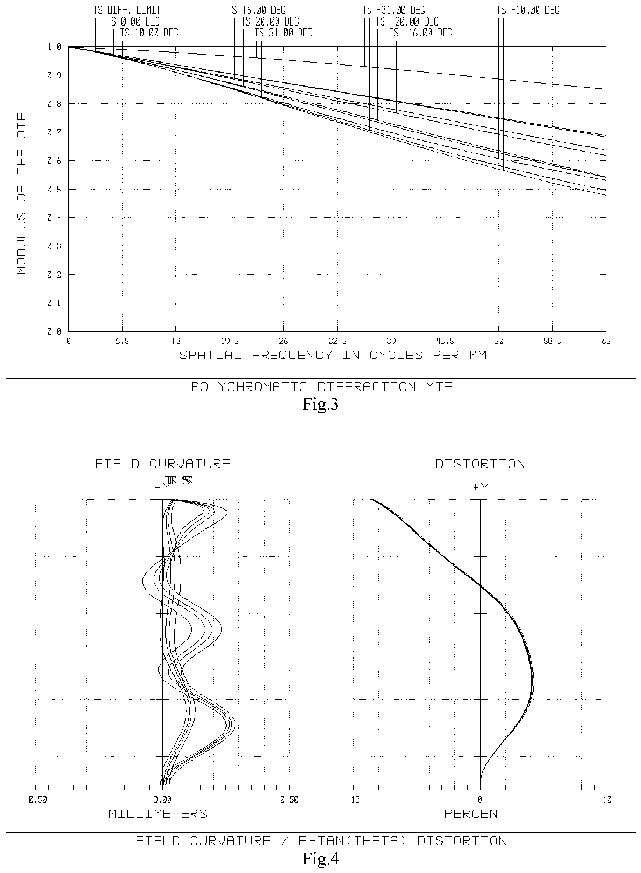

The first optical element 10, the third optical element 30, and the fourth optical element 40 are made of barium crown glass (BaK1) materials. The second optical element 20 and the fifth optical element 50 are made of dense barium flint glass (ZBaF13) materials. Other parameters of the structure of Fig.1 are shown in table 1 and table 2. Fig. 2 is a spot diagram of the optical system shown in Fig.1. Fig.3 is an optical transfer function diagram of the optical system shown in Fig.1. Fig.4 is a field curvature and distortion diagram of the optical system shown in Fig.1.

**table 1**

| Surface | surface type | Raduis(mm) | Thickness(mm) | Material | |
|---|---|---|---|---|---|
| | | | | nd | vd |
| F0 | | infinite | 13∼15 | | |
| F1 | spheric | 24.7 | 4.5 | 1.53 | 56 |
| F2 | spheric | 683 | 6.1 | | |
| F3 | spheric | -14.6 | 2.7 | 1.64 | 23 |
| F4 | spheric | -57.3 | 0.2 | | |
| F5 | spheric | 1.33E+02 | 10.5 | 1.53 | 56 |
| F6 | aspheric | -31 | 0.1 | | |
| F7 | aspheric | 10.5 | 8.5 | 1.53 | 56 |
| F8 | aspheric | 51.2 | 1.9 | | |
| F9 | aspheric | 20.3 | 2.5 | 1.64 | 23 |
| F10 | aspheric | 20.4 | 9.6 | | |
| F11 | | infinite | | | |

**table 2**

| Surface | K | A2 | A4 | A6 | A8 | A10 | A12 | A14 |
|---|---|---|---|---|---|---|---|---|
| F6 | -1.1E+00 | 0.0E+00 | 5.0E-04 | 5.8E-06 | -3.6E-08 | 1.3E-10 | -2.5E-13 | 2.0E-16 |
| F7 | -5.5E+00 | 0.0E+00 | 1.0E-04 | -4.1E-06 | 5.1E-08 | -3.1E-10 | 9.6E-13 | -1.2E-15 |
| F8 | 2.0E-01 | 0.0E+00 | 3.0E-04 | -4.0E-06 | -4.0E-09 | 2.9E-10 | -1.6E-12 | 2.6E-15 |
| F9 | -4.5E+20 | 0.0E+00 | 5.0E-04 | -5.5E-06 | -1.6E-08 | 5.5E-10 | -3.0E-12 | 5.3E-15 |
| F10 | 1.0E-01 | 0.0E+00 | 1.0E-03 | -2.4E-05 | 2.6E-07 | -1.5E-09 | 4.4E-12 | -5.1E-15 |

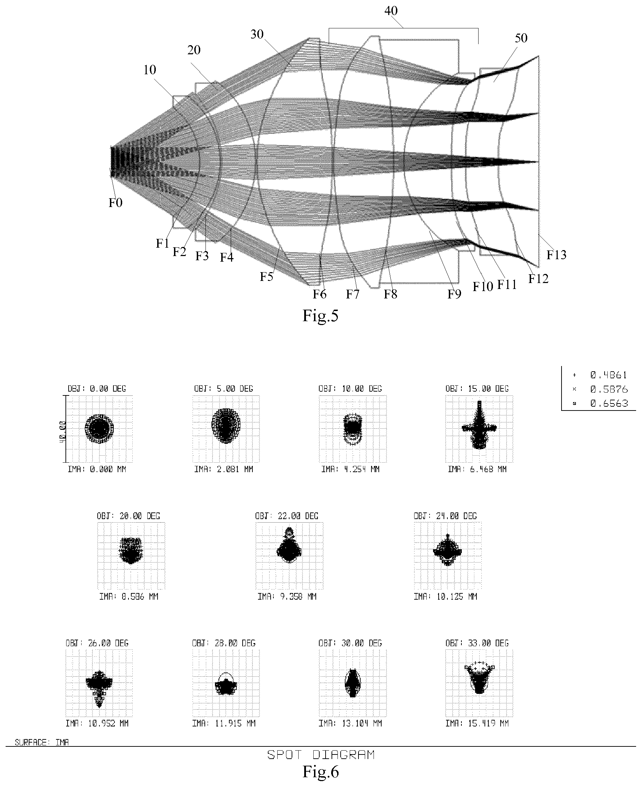

Referring to FIG.5, FIG.5 illustrates a schematic structure of an optical system for arc screen display according to another embodiment of the present disclosure. The optical system shown in Fig.5 was designed under a focal length of 12 nanometers, an entrance pupil diameter of 4 nanometers, and a field angle of 66 degrees. The optical system includes a first optical element 10, a second optical element 20, a third optical element 30, a fourth optical element 40, and a fifth optical element 50. The first optical element 10, the second optical element 20, the third optical element 30, and the fifth optical element 50 are all lenses, and the fourth optical element 40 is a lens unit. The first optical element 10 includes a fifth concave surface F1 facing to an object side and an eighth convex surface F2 facing to an image side. The second optical element 20 includes a sixth concave surface F3 facing to the object side and a ninth convex surface F4 facing to the image side. The third optical element 30 includes a tenth convex surface F5 facing to the object side and an eleventh convex surface F6 facing to the image side. The fourth optical element 40 includes a twelfth convex surface F7 facing to the object side, a thirteenth convex surface F8 facing to the image side , a fourteen convex surface F9 facing to the object side, and a seventh concave surface F10 facing to the image side. The fifth optical element 50 includes a fifteenth convex surface F11 facing to the object side and an eighth concave surface F12 facing to the image side. The first optical element 10, the second optical element 20, the third optical element 30, the fourth optical element 40, and the fifth optical element 50 are sequentially disposed from the object side along an linear optical axis. In addition, the F0 shown in Fig.5 is an object plane, and the F13 shown in Fig. 5 is an image plane.

The fifth concave surface F1, the eighth convex surface F2, the sixth concave surface F3, the ninth convex surface F4, the thirteenth convex surface F8, and the fourteenth convex surface F9 are all spherical surfaces. The tenth convex surface F5, the eleventh convex surface F6, and the twelfth convex surfaces F7, the seventh concave surface F10, the fifteenth convex surface F11, and the eighth concave surface F12 are all aspherical surfaces.

Where, the first optical element 10, the second optical element 20, and the third optical element 30 are made of BaK1 materials. The fourth optical element 40 is made of BaK1 materials, ZBaF13 materials, and light crown glass (QK3) materials. The fifth optical element 50 is made of barium flint glass (BaF3) materials.

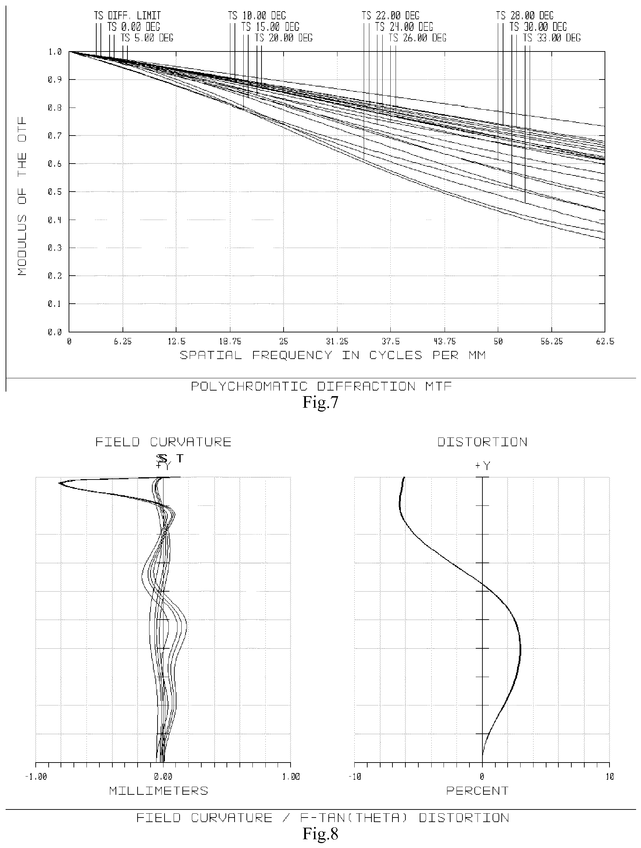

Where, other parameters of the optical system in FIG. 5 are shown in table 3 and table 4. Fig. 6 is a spot diagram of the optical system shown in FIG. 5. FIG. 7 is an optical transfer function diagram of the optical system shown in FIG. 5. FIG. 8 is a field curvature and distortion diagram of the optical system shown in FIG.5.

**table 3**

| Surface | surface type | Raduis(mm) | Thickness(mm) | Material | |
|---|---|---|---|---|---|
| | | | | nd | vd |
| F0 | | infinite | 13∼15 | | |
| F1 | spheric | -10 | 3 | 1.53 | 56 |
| F2 | spheric | -12 | 0.2 | | |
| F3 | spheric | -14.5 | 5 | 1.53 | 56 |
| F4 | spheric | -15.1 | 0.2 | | |
| F5 | aspheric | 2.17E+01 | 11 | 1.53 | 56 |
| F6 | aspheric | -95.7 | 0.2 | | |
| F7 | aspheric | 32.8 | 8.8 | 1.53 | 56 |
| F8 | spheric | -75.1 | 1.5 | 1.64 | 23 |
| F9 | spheric | 14.5 | 7 | 1.49 | 57 |
| F10 | aspheric | 103.5 | 2.1 | | |
| F11 | aspheric | 7.9 | 4.8 | 1.58 | 30 |
| F12 | aspheric | -8.1 | 5.9 | | |
| F13 | | infinite | | | |

**table 4**

| Surface | K | A2 | A4 | A6 | A8 | A10 |
|---|---|---|---|---|---|---|
| F5 | -3.1E+00 | 0.0E+00 | 3.0E-05 | -1.6E-07 | 6.4E-10 | -8.0E-13 |
| F6 | 8.8E+00 | 0.0E+00 | -9.7E-05 | 6.7E-07 | -1.5E-09 | 1.1E-12 |
| F7 | 1.8E+00 | | 1.0E-04 | 8.8E-07 | 2.0E-09 | 1.3E-12 |
| F10 | 1.1E+00 | 0.0E+00 | 3.0E-05 | 2.7E-06 | -3.2E-08 | 1.2E-10 |
| F11 | -1.6E+37 | | 5.0E-04 | -5.1E-06 | 1.6E-08 | -8.6E-12 |
| F12 | -1.3E+39 | 0.0E+00 | 1.0E-03 | -1.3E-05 | 6.5E-08 | -1.1E-10 |

In the table 1 and the table 3, the term "Radius" represents radius of curvature of the surface corresponding to the surface code n. The term "Thickness" represents thickness of the lens or interval between the lenses. The term "nd" represents refractive index at a line of d. The term "vd" represents Abbe number on the line of d. The term "surface type" indicates a surface type corresponding to the surface code n, such as spherical surface and aspherical surface. The aspherical parameters are shown in the table 2 and the table 4. Where the K, A2, A4, A6 , A8 , A10, A12 and A14 represents aspherical coefficients.

The optical systems for arc screen display shown in Figs. 1 and 5 all satisfy a condition: -10%≤d≤-5%, and the d is the maximum edge distortion. Using the optical system shown in Fig. 1, a large screen effect of 18.8 meters multiply 25.9 meters is achieved at a distance of 25 meters, and the maximum edge distortion is -6.2%, which satisfies the above condition. Using the optical system shown in Fig. 5, a large screen effect of 17.7 meters multiply 24.3 meters is achieved at a distance of 25 meters, and the maximum edge distortion is -8.3%, which satisfies the above condition. It can be seen that the optical systems shown in FIG. 1 and FIG. 5 all achieve an arc screen effect, and an overall viewing effect of an arc screen IMAX is realized. It should be noted that the illustrated optical system shown in FIG. 1 and FIG. 5 are schematic diagrams in the design of the Zmax software.

It can be seen that the optical system for arc screen display of the solution provided by the present disclosure reversely processes the actual relationship between an object and an image in the design, that is, the object in the design is the image in actual application, and the image in the design is the object in actual application. In the design process, the maximum field at the edge of the optical system is reserved for negative distortion (barrel shape), thus in actual use, it will present a picture with a certain positive distortion (cushion shape), and achieve curved planar imaging effect as well as the arc screen display effect.

The embodiment of the disclosure further provides a head mounted display device, where the head mounted display device includes the optical system shown in Figs. 1 and 5.

The above embodiments are only used to illustrate the technical solutions of the present disclosure, and are not intended to be limiting. Although the present disclosure has been described in detail with reference to the above embodiments, those skilled in the art will understand that the technical solutions described in the embodiments can be modified, or some of the technical features can be replaced by equivalents. The modifications or substitutions do not deviate from the scope of the technical solutions of the embodiments of the present disclosure.

## Claims

1. An optical system for arc screen display, comprising:
a first optical element, a second optical element, a third optical element, a fourth optical element, and a fifth optical element;
wherein each of the first optical element, the second optical element, the third optical element, the fourth optical element, and the fifth optical element comprises a lens and/or a lens unit;
the first optical element, the second optical element, the third optical element, the fourth optical element, and the fifth optical element are sequentially disposed from the object side along a linear optical axis; and
the optical system satisfies a condition: -10%≤d≤-5%, and the d is a maximum edge distortion.

2. The optical system of claim 1, wherein when a focal length of the optical system is 19 nanometers, an entrance pupil diameter of the optical system is 4 nanometers, and a field angle of the optical system is 62 degrees, the first optical element, the second optical element, the third optical element, the fourth optical element, and the fifth optical element are all lenses.

3. The optical system of claim 2, wherein the first optical element comprises a first convex surface facing to an object side and a first concave surface facing to an image side;
the second optical element comprises a second concave surface facing to the object side and a second convex surface facing to the image side;
the third optical element comprises a third convex surface facing to the object side and a fourth convex surface facing to the image side;
the fourth optical element comprises a fifth convex surface facing to the object side and a third concave surface facing to the image side; and
the fifth optical element comprises a sixth convex surface facing to the object side and a seventh convex surface facing to the image side.

4. The optical system of claim 3, wherein the first convex surface, the first concave surface, the second concave surface, the second convex surface, and the third convex surface are all spherical surfaces; and
the fourth convex surface, the fifth convex surface, the third concave surface, the sixth convex surface and the seventh convex surface are all aspherical surfaces.

5. The optical system of any one of claim 2 to claim 4, wherein the first optical element, the third optical element, and the fourth optical element are made of barium crown glass (BaK1) materials; and
the second optical element and the fifth optical element are made of dense barium flint glass (ZBaF13) materials.

6. The optical system of claim 1, wherein when a focal length of the optical system is 12 nanometers, an entrance pupil diameter of the optical system is 4 nanometers, and a field angle of the optical system is 66 degrees, the first optical element, the second optical element, the third optical element, and the fifth optical element are all lenses, and the fourth optical element is a lens unit.

7. The optical system of claim 6, wherein the first optical element comprises a fifth concave surface facing to an object side and an eighth convex surface facing to an image side;
the second optical element comprises a sixth concave surface facing to the object side and a ninth convex surface facing to the image side;
the third optical element comprises a tenth convex surface facing to the object side and an eleventh convex surface facing to the image side;
the fourth optical element comprises a twelfth convex surface facing to the object side, a thirteenth convex surface facing to the image side, a fourteen convex surface facing to the object side, and a seventh concave surface facing to the image side; and
the fifth optical element comprises a fifteenth convex surface facing to the object side and an eighth concave surface facing to the image side.

8. The optical system of claim 6, wherein the fifth concave surface, the eighth convex surface, the sixth concave surface, the ninth convex surface, the thirteenth convex surface, and the fourteenth convex surface are all spherical surfaces; and
the tenth convex surface, the eleventh convex surface, and the twelfth convex surfaces, the seventh concave surface, the fifteenth convex surface, and the eighth concave surface are all aspherical surfaces.

9. The optical system of any one of claim 6 to claim 8, wherein the first optical element, the second optical element, and the third optical element are made of BaK1 materials;
the fourth optical element is made of BaK1 materials, ZBaF13 materials, and light crown glass (QK3) materials; and
the fifth optical element is made of barium flint glass (BaF3) materials.

10. A head mounted display device, comprising the optical system of any one of claim 1 to claim 9.
